# EUROPÄISCHE PATENTSCHRIFT

(11) **EP 1 936 314 B1**
(45) Veröffentlichungstag und Bekanntmachung des Hinweises auf die Patenterteilung: **15.02.2012**
(21) Anmeldenummer: 07122097.4
(22) Anmeldetag: 03.12.2007
(51) Int. Cl.: F28D 20/00, F24H 9/12

(54) **Warmwasser-Schichtspeicher**
Stratified hot water storage tank
Réservoir d'eau chaude stratifié

(30) Priorität: 09.12.2006 DE 102006058160
(43) Veröffentlichungstag der Anmeldung: 25.06.2008
(73) Patentinhaber: Kraus, Martin, 85131 Pollenfeld (DE)
(72) Erfinder: Kraus, Martin, 85131 Pollenfeld (DE)
(74) Vertreter: Schlief, Thomas P.

(56) Entgegenhaltungen:
- DE-A1- 4 417 138
- DE-A1- 10 124 781
- DE-A1- 19 731 351
- DE-A1- 19 752 813
- DE-C1- 10 233 138
- DE-U1- 9 001 675
- DE-U1- 29 723 274
- DE-U1- 29 908 403

## Beschreibung

Die Erfindung betrifft einen Warmwasser-Schichtspeicher nach dem Oberbegriff des Anspruchs 1.

Warmwasser-Schichtspeicher sind vielfältig bekannt. Sie dienen dazu, beim Beladen des Speichers eine Durchmischung heißerer und kälterer Wasseranteile soweit wie möglich zu verhindern. Auf diese Weise bleibt Wärmeenergie auf möglichst hoher Temperatur erhalten und somit effizient nutzbar.

Ein gattungsgemäßer Speicher ist beispielsweise in der DE 44 17 138 A1 offenbart, bei dem die Vorlaufinnenkammer mit der Vorlaufaußenkammer sowie die Rücklaufinnenkammer mit der Rücklaufaußenkammer über vertika> le Anordnungen von Öffnungen miteinander verbunden sind. Hierdurch sollen die Strömungen in den vertikal verlaufenden Kammern im wesentlichen vertikal verlaufen, so dass die vertikale und temperaturabhängige Schichtung des Wassers mit dem Tankvolumen außerhalb der Kammern bei allen Betriebsbedingungen erhalten bleibt. Nachteilig bei dieser Konstruktion ist jedoch der vergleichsweise komplizierte Aufbau der vier Kammern sowie der hohe Materialaufwand. Auch ist die Wirksamkeit dieses Speichers verbesserungswürdig.

Weiterhin ist aus der DE 198 16 384 ein Warmwasser-Schichtspeicher bekannt, in den eine in Aufsicht spiralförmige, vertikal angeordnete Einlaufkammer eingesetzt ist. Diese zeichnet sich dadurch aus, dass das einlaufende Wasser um mehr als 180° umgelenkt wird und damit genügend Zeit hat, entsprechend seiner Temperatur in die entsprechende Höhe zu gelangen, bevor es durch eine der vertikal beabstandeten Öffnungen in das eigentliche Speichervolumen fließt.

Es ist Aufgabe der vorliegenden Erfindung, einen Warmwasser-Schichtspeicher gemäß dem Oberbegriff des Anspruchs 1 derart weiterzubilden, dass ein einfacher Aufbau mit einer verbesserten Wasserschichtung resultiert.

Diese Aufgabe wird durch den Warmwasser-Schichtspeicher gemäß den Merkmalen des Anspruchs 1 gelöst.

Der Schichtspeicher gemäß der Erfindung weist insbesondere den Vorteil auf, dass durch die erfindungsgemäße Ausgestaltung der Vorlauf-Zwischenkammeröffnung bzw. der Rücklauf-Zwischenkammeröffnung eine Beruhigung des strömenden Wassers schon in den jeweiligen Außenkammern resultiert, so dass das Wasser anschließend gemäß seiner Temperatur auf der entsprechenden Höhe von den Außenkammern in das umgebende Tankvolumen eintreten kann. Verwirbelungen im Tank außerhalb der Innenkammern treten somit kaum auf, wobei eine optimierte Schichtung des Wassers erreicht wird.

Mit anderen Worten wird im Gegensatz zum Stand der Technik das Wasser durch die Vorlauf-Zwischenkammeröffnung bzw. die Rücklauf-Zwischenkammeröffnung zumindest zum Teil aufwärts bzw. abwärts zwangsgeführt. Somit resultiert schon beim Übergang von der jeweiligen inneren Kammer zur jeweiligen äußeren Kammer eine Strömungsberuhigung. Die Zwangsführung nach oben (im Falle des Vorlaufs) und/oder die Zwangsführung nach unten (im Falle des Rücklaufs) schaffen Strömungsverhältnisse, die einem gerichteten Wasserstrom in die jeweilige Außenkammer entsprechen, so dass Verwirbelungen schon in den Außenkammern kaum zugelassen werden.

Somit ist es gemäß der Erfindung entsprechend einer bevorzugten Ausführungsform möglich, dass im Gegensatz zum Stand der Technik warmes Wasser im Vorlauf immer nach oben in die Vorlaufaußenkammer und kaltes Wasser im Rücklauf immer nach unten in die Rücklaufaußenkammer strömt.

Insgesamt ergibt sich eine dauerhafte stabile Schichtung beim Be- und Entladen des Speichers. In der Vorlauf- und der Rücklaufaußenkammer sortiert sich das Wasser nach dem Schwerkraftprinzip selbst, um sich dann nahezu verwirbelungsfrei in die entsprechende Temperaturzone einzuschichten.

Weiterhin hat der erfindungsgemäße Speicher den Vorteil, dass er einen einfachen Aufbau mit entsprechend einfacher Herstellungsweise aufweist.

Vorteilhafte Weiterbildungen sind durch die Merkmale der Unteransprüche gekennzeichnet.

Vorteilhafterweise ist die Vorlauf-Innenkammeröffnung derart angeordnet, dass das Wasser abwärts geleitet wird, um zur Vorlauf-Zwischenkammeröffnung zu gelangen, so dass hierdurch schon eine Strömungsberuhigung eintritt, bevor das Wasser anschließend aufwärts in die Vorlaufaußenkammer geleitet wird.

Entsprechend ist es vorteilhaft, wenn die Rücklauf-Innenkammeröffnung derart angeordnet ist, dass das Wasser aufwärts geleitet wird, um zur Rücklauf-Zwischenkammeröffnung zu gelangen.

Vorzugsweise ist die Vorlaufinnenkammer im unteren Bereich der Vorlaufkammer angeordnet. Das erhitzte bzw. warme vorlaufende Wasser, das in der Regel von einem Heizkessel zugeführt wird, verlässt - bei einem Warmwasserüberschuss - somit die Vorlaufinnenkammer und steigt nach Passieren der Vorlauf-Zwischenkammeröffnung in beruhigtem Zustand in der Vorlaufaußenkammer entsprechend seiner Temperatur nach oben.

Entsprechend ist es vorteilhaft, wenn die Rücklaufinnenkammer im oberen Bereich der Rücklaufkammer angeordnet ist. Das rücklaufende kühlere Wasser, das im Überschuss vorhanden ist und daher nicht unmittelbar zum Heizkessel zurückgeführt wird, fällt dann nach Passieren der Rücklauf-Zwischenkammeröffnung entsprechend seiner Temperatur und erfindungsgemäß beruhigt in der Rücklaufaußenkammer, um durch die entsprechenden Öffnungen in der Rücklaufaußenkammer in den Tank zu fließen.

Gemäß einer bevorzugten Ausführungsform umfassen die Vorlauf-Zwischenkammeröffnung und/oder die Rücklauf-Zwischenkammeröffnung vorzugsweise horizontal verlaufende Schlitze. Diese Ausgestaltung hat den Vorteil, dass das durch die Schlitze herausströmende Wasser weiter beruhigt wird. Ein horizontaler Verlauf hat weiterhin den Vorteil, dass hierdurch eine Verwirbelung des Wassers verhindert wird, die bei einem vertikalen oder schrägen Schlitz nicht zu vermeiden wäre.

Einer besonders einfachen Herstellung kommt es zugute, wenn die Vorlaufaußenkammer und/oder die Vorlaufinnenkammer jeweils quaderförmig ausgestaltet sind. Entsprechend ist es vorteilhaft, wenn die Rücklaufaußenkammer und die Rücklaufinnenkammer jeweils eine quaderförmige Form aufweisen.

Weiterhin ist es zum Zwecke eines einfachen Aufbaus bevorzugt, wenn die Vorlaufinnenkammer zum einen Teil durch ein L- oder U-förmig abgekantetes Blech und zum anderen Teil von Wandabschnitten der Vorlaufaußenkammer gebildet ist.

Somit kann die Vorlaufaußenkammer aus vorzugsweise einem Blech mit ihren sechs Seitenwänden gebogen werden, während zur Bildung der Vorlaufinnenkammer ein einfach oder zweifach gebogenes Blech mit nach unten gerichteter Öffnung von oben in die Vorlaufaußenkammer eingesetzt und dort beispielsweise mit einer Wand der Vorlaufaußenkammer verschraubt oder verschweißt wird. Eine untere Kante dieses Blechs kann dann mit der Unterseite der Vorlaufaußenkammer den genannten horizontalen Schlitz bilden, der Teil der Vorlauf-Zwischenkammeröffnung ist.

Entsprechendes gilt vorzugsweise für die Rücklaufinnenkammer zum Einsatz in die Rücklaufaußenkammer, wobei allerdings die Verhältnisse zu vertauschen sind.

Es hat sich als besonders vorteilhaft für die Wasserberuhigung erwiesen, wenn die Vorlauf-Zwischenkammeröffnung eine Strömungsverengung umfasst, die bevorzugt dem besagten horizontalen Schlitz folgt. Diese Verengung hat den Vorteil, dass das ausströmende Wasser keinen Verwirbelungen auf dem sich an den Schlitz anschließenden Weg unterworfen wird.

Vorzugsweise wird die Strömungsverengung durch bevorzugt vertikal verlaufende Wandabschnitte der Vorlaufinnenkammer und der Vorlaufaußenkammer gebildet. Dies ist in besonders einfacher Weise mit der vorgenannten Konstruktion der quaderförmigen Kammern möglich, da in diesem Fall das Wasser entlang parallel verlaufender Wände von Innen- und Außenkammer aufwärts strömen kann. Auf diese Weise kann die erfindungsgemäße aufwärts gerichtete Zwangsführung von der Vorlaufinnenkammer zur Vorlaufaußenkammer realisiert werden.

Entsprechendes gilt vorzugsweise für eine sich an die Rücklauf-Zwischenkammeröffnung anschließende Strömungsverengung.

Die Vorlauf-Innenkammeröffnung, die in die Vorlaufinnenkammer führt, ist bevorzugt dadurch gebildet, dass das Vorlauf-Einlaufrohr und das Vorlauf-Ablaufrohr als durchgehendes Vorlaufrohr ausgebildet sind und in diesem Rohr mindestens eine Vorlauf-Innenkammeröffnung vorgesehen ist. Das Vorlaufrohr ist zum Zwecke der einfacheren Herstellung vorzugsweise einstückig ausgebildet.

Um mit Hilfe einer relativ langsamen Überströmung von der Vorlaufinnenkammer in das Tankvolumen nur möglichst geringe Schichtungsstörungen zu verursachen, beträgt das Verhältnis des Öffnungsquerschnitts der Vorlauf-Zwischenkammeröffnung zum Öffnungsquerschnitt der Vorlauf-Innenkammeröffnung vorzugsweise zwischen 1 und 4, und bevorzugt ungefähr 1,5. Aus dem gleichen Grund beträgt das Verhältnis des Öffnungsquerschnitts der Rücklauf-Zwischenkammeröffnung zum Öffnungsquerschnitt der Rücklauf-Innenkammeröffnung vorzugsweise zwischen 1 und 4, und bevorzugt ungefähr 1,5.

Bei der genannten Konstruktion eines durchgehenden Vorlaufrohres ist die Vorlauf-Innenkammeröffnung vorzugsweise durch eine längliche Öffnung in dem Rohr gebildet, welches dann an dieser Stelle die Form einer Rinne aufweist. Diese Öffnung kann durch Herausschneiden aus dem Rohr in einfacher Weise realisiert werden.

Die mindestens eine Vorlauf-Innenkammeröffnung ist bevorzugt nach oben gerichtet, wobei das austretende Wasser vorzugsweise um mehr als 180° umgelenkt wird, um zu der Vorlauf-Zwischenkammeröffnung zu gelangen. Diese Ausgestaltung trägt zu einer weiteren Beruhigung des strömenden Wassers bei. Ist die Vorlauf-Innenkammeröffnung nach oben und seitlich offen und verläuft die Vorlauf-Zwischenkammeröffnung vertikal (s.o), beträgt der Umlenkwinkel zwischen 270° und 360°.

Vorteilhaft ist eine entsprechende Ausgestaltung des Rücklauf-Einlaufrohres und des Rücklauf-Ablaufrohres zur Bildung eines durchgehenden Rücklaufrohres unter umgekehrten Vorzeichen. Gleiches gilt auch für die rinnenförmige Ausgestaltung und die Umlenkung des rücklaufenden Wassers von Rücklaufinnenkammer in die Rücklaufaußenkammer.

Einer einfachen Konstruktion des Warmwasser-Schichtspeichers kommt es des Weiteren zugute, wenn das Vorlauf- und das Rücklaufrohr auf im wesentlichen gleicher Höhe verlaufen. Die beiden Innenkammern können gleichfalls auf gleicher Höhe angeordnet sein.

Die Vorlaufkammer kann vorzugsweise vollkommen identisch zu der Rücklaufkammer ausgebildet sein. Beide sind dann lediglich um 180° zueinander gedreht im Tank angeordnet. Insbesondere beim Verlauf der Vor- und Rücklaufrohre auf gleicher Höhe sind die Vorlaufkammer und die Rücklaufkammer dann horizontal gegeneinander versetzt und mit geringer vertikaler Überlappung angeordnet.

Nicht nur bei der vorgenannten Anordnung ist es vorteilhaft, wenn die Vorlaufkammer und die Rücklaufkammer zur Erhöhung der Stabilität und leichteren Anbringung im Tank mechanisch miteinander verbunden sind, z.B. mittels Verschweißung und/oder Verschraubung.

Im folgenden wird die Erfindung anhand von Figuren erläutert. Es zeigen:
- **Figur 1**: eine schematische Seitenansicht eines Warmwasser-Schichtspeichers mit perspektivisch dargestelltem Einsatz;
- **Figur 2**: eine perspektivische Ansicht eines erfindungsgemäßen Einsatzes für einen Warmwasser-Schichtspeicher;
- **Figuren 2a, 2b**: längsgeschnittene Detailansichten des Einsatzes gemäß der Figur 2, in Vorderansicht;
- **Figuren 3a, 3b**: ein Vorlauf- bzw. ein Rücklaufrohr in Seitenansicht, und
- **Figuren 4a - 4d**: verschiedene Ansichten des Einsatzes gemäß der Figur 2.

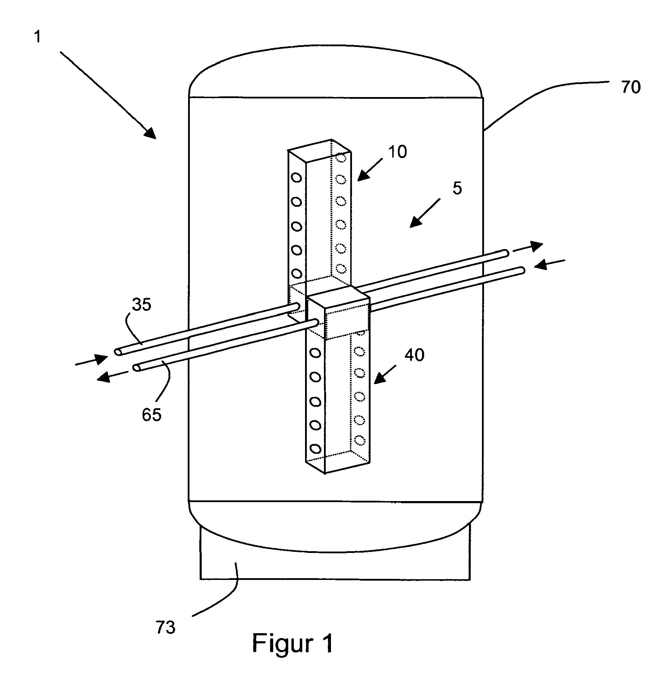

In Figur 1 ist ein Warmwasser-Schichtspeicher 1 mit einem Tank 70 von der Seite dargestellt, der - auf einem Sockel 73 aufgestellt - in einen Heizkreislauf in bekannter Weise eingefügt werden kann. In seiner Mitte sind Anschlussstutzen zum Einleiten und Herausleiten von Wasser dargestellt, welche durch die Tankwandungen geführt sind. Die Warmwasser zum Speicher 1 transportierenden Leitungen können im Vorlauf von einem Heizkessel und/oder einem Solaranlage gespeist werden (nicht dargestellt), während die Warmwasser abführenden Leitungen zu Raumheizungen und/oder zu Warmwasserversorgungsgeräten führen (ebenfalls nicht dargestellt). Im Rücklauf wird der Warmwasser-Schichtspeicher 1 von den Heizungen mit kälterem Wasser beliefert, das teilweise auch zum Heizkessel zurückgeführt wird.

Temperaturbedingt strömt kälteres Wasser nach unten und wärmeres Wasser nach oben, so dass sich eine Wasserschichtung im Tank 70 entsprechend den Temperaturen der Wasserschichten einstellt. Um Verwirbelungen dieser Schichten zu vermeiden, wird warmes Wasser in obere Bereiche des Tanks 70 eingeschichtet und kaltes Wasser entsprechend in untere Bereiche.

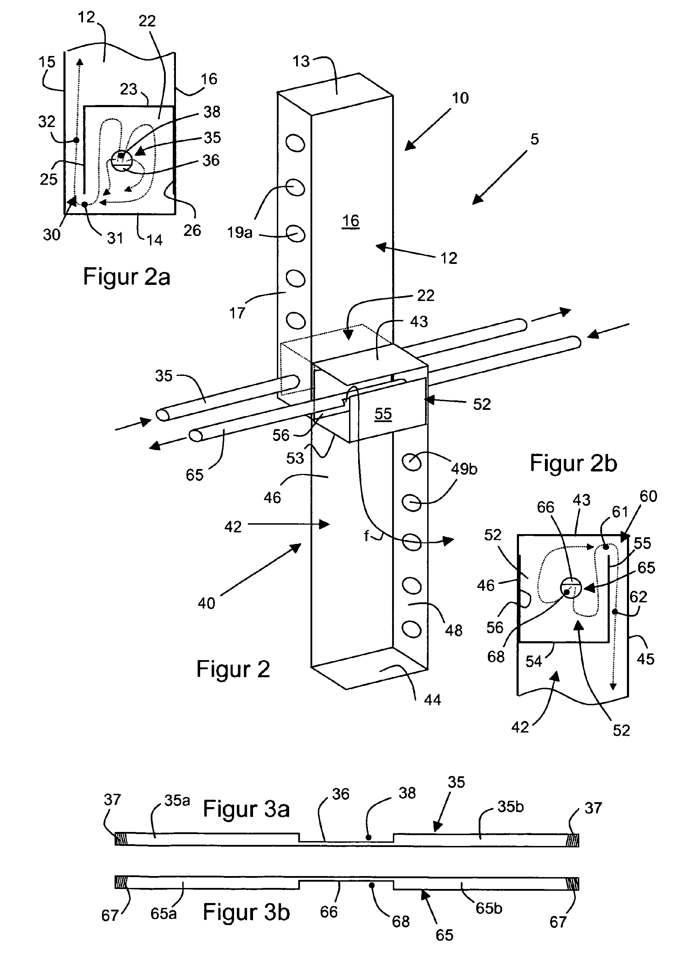

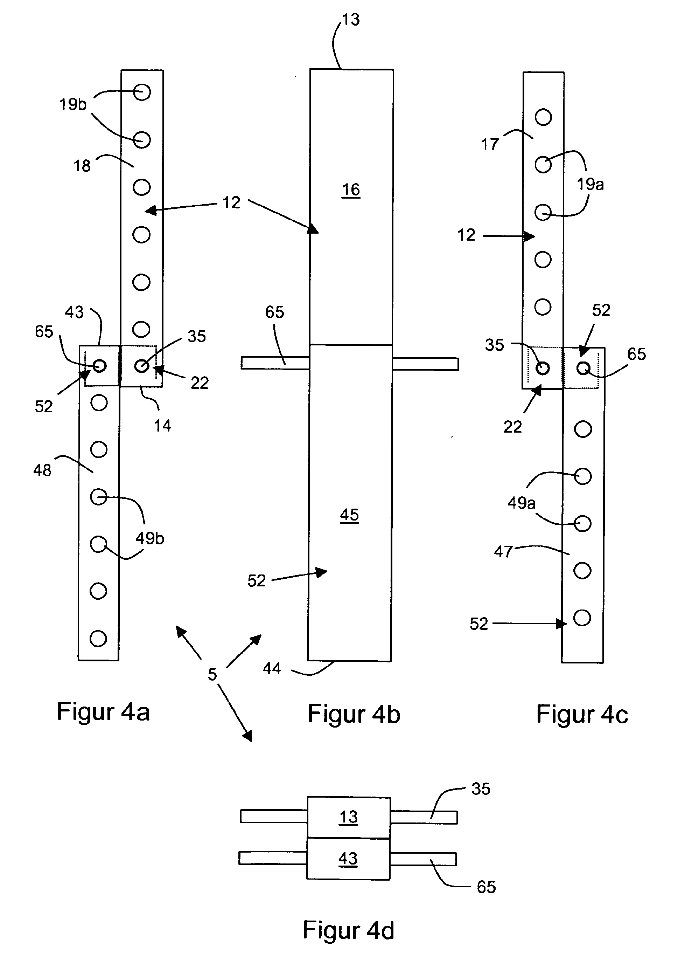

In den Tank 70 ist ein perspektivisch gezeichneter dargestellter Einsatz 5 eingebracht, der in den Figuren 2 und 4 genauer dargestellt ist. Der Einsatz 5 ist länglich ausgebildet und vertikal im Tank 70 aufgestellt. Er umfasst im wesentlichen eine Vorlaufkammer 10, eine Rücklaufkammer 40 sowie ein Vorlaufrohr 35 und ein Rücklaufrohr 65. Die Kammer 10 bzw. die Kammer 40 dienen zur Aufnahme, zur Beruhigung und zum Transport von warmem Wasser im Vorlauf bzw. kaltem Wasser im Rücklauf. Bei Bedarfsspitzen wird warmes Wasser vom Heizkessel mittels des Vorlaufrohrs 35 im wesentlichen durch den Tank 1 hindurch direkt zu den Verbrauchern geleitet, die in der Regel Heizkörper sind. Wenn der Bedarf an warmem Wasser durch die Heizkörper gering ist, wird das warme Wasser durch das Vorlaufrohr 35 in die Vorlaufkammer 10 transportiert und anschließend im Tank 70 geschichtet gespeichert. Ist der Warmwasserbedarf, insbesondere für Heizungszwecke hingegen größer als die vom Heizkessel zu liefernde Wassermenge, wird über die Vorlaufkammer 10 Warmwasser aus dem Tankvolumen abgezogen und über das Vorlaufrohr 35 zu den Heizkörpern geleitet (s. Pfeile in Figur 1).

Wenn hingegen im Rücklauf ein Überschuss an kaltem Wasser vorhanden ist, wird dieses ebenfalls über die Rücklaufkammer 40 im Tank 70 geschichtet gespeichert, um zu gegebener Zeit auf gleichem Wege wieder zum Heizkessel gefördert zu werden (s. Pfeile in Figur 1).

Der Einsatz 5 des erfindungsgemäßen Warmwasser-Schichtspeichers 1 dient dazu, das zum Speicher 1 zulaufende und dort zwischenzuspeichernde Wasser - ob im Vor- oder im Rücklauf - möglichst verwirbelungsfrei zu den schon vorhandenen Wasserschichten mit gleicher Temperatur im Tank 70 zu leiten.

Wie der perspektivischen Darstellung der Figur 2 sowie den Figuren 4a - 4d zu entnehmen ist, ist die Vorlaufkammer 10 quaderförmig ausgestaltet und weist eine Deckenwand 13, eine Bodenwand 14, eine äußere Seitenwand 15, eine innere Seitenwand 16, eine Vorderwand 17 und eine Rückwand 18 auf. In der Vorderwand 17 sind vertikal beabstandete Öffnungen 19a und in der Rückenwand 18 - jeweils geringfügig zu den Öffnungen 19a in der Höhe versetzt - vertikal beabstandete Öffnungen 19b vorgesehen.

Die Vorlaufkammer 10 ist in zwei Kammern geteilt. Zum einen ist dies eine Vorlaufaußenkammer 12 und zum anderen eine Vorlaufinnenkammer 22, die innerhalb der Vorlaufaußenkammer 12 in deren unteren Bereich angeordnet ist. Das Vorlaufrohr 35 ist durch die Vorlaufinnenkammer 22 hindurchgeführt. Es weist - wie insbesondere der Figur 3a zu entnehmen ist - drei Abschnitte auf, nämlich ein Vorlauf-Einlaufrohr 35a, einen rinnenförmigen, nach oben offenen Abschnitt 36 und ein sich anschließendes Vorlauf-Ablaufrohr 35b. Alle diese Abschnitte 35a, 36, 35b sind einstückig miteinander verbunden und bilden das Vorlaufrohr 35, das an seinen Enden 37 jeweils Schraubgewinde zum Anschließen von Rohren aufweist. Der rinnenförmige Abschnitt 36 bildet die besagte Vorlauf-Innenkammeröffnung 38, aus der über den Abschnitt 35a zufließendes Warmwasser in die Vorlaufinnenkammer 22 gelangt und auf diesem Wege - bei Bedarf von Verbrauchern (insbesondere Heizkörpern) - auch wieder verlässt.

Die Vorlaufinnenkammer 22 ist durch ein nach unten offenes, U-förmig gebogenes Blech gebildet, das mit einer Seitenwand 26 an der Innenseite der inneren Seitenwand 16 der Vorlaufaußenkammer 12 befestigt ist, s. Figur 2a. Nach oben hin schließt eine Deckenwand 23 die Vorlaufinnenkammer 22 zur Vorlaufaußenkammer 12 ab.

Die dritte, vertikal verlaufende Wand 25 der Vorlaufinnenkammer 22 endet in definiertem Abstand vor der Bodenwand 14 der Vorlaufaußenkammer 12 (die identisch mit der Bodenwand der Vorlaufkammer 10 ist). Die Spalthöhe beträgt beispielsweise 20 % der Höhe der Wand 25. Auf diese Weise entsteht ein sich über die Breie (senkrecht zur Zeichenebene der Figur 2a) der Vorlaufkammer 10 erstreckender Schlitz 31, der Teil der Vorlauf-Zwischenkammeröffnung 30 ist, welche die Vorlaufinnenkammer 22 mit der Vorlaufaußenkammer 12 verbindet, s. Figur 2a. An den Schlitz bzw. die Öffnung 31 schließt sich - in Strömungsrichtung gesehen - eine als vertikaler Kanal ausgebildete Strömungsverengung 32 an, welche ebenfalls Teil der Vorlauf-Zwischenkammeröffnung 30 ist und deren Querschnitt (in der Zeichenebene der Figur 2a) vorliegend gleich der Höhe des Schlitzes 31 ist. Der Querschnitt der Strömungsverengung 32 ist entlang der Seitenwand 25 der Vorlaufinnenkammer 22 und der äußeren Seitenwand 15 der Vorlaufkammer 12 konstant. Die Breite der Strömungsverengung 32 (senkrecht zur Zeichenebene der Figur 2a) entspricht der Breite der Vorlaufkammer 10. Die Strömungsverengung 32 und somit auch die Vorlauf-Zwischenkammeröffnung 30 enden mit der Oberkante der Deckenwand 23 der Vorlaufinnenkammer 22.

Durch das Vorlaufrohr 35 herantransportiertes Wasser (s. Pfeile links und rechts vom Rohr 35 in Figur 2) wird entsprechend dem in dem Rohr herrschenden Wasserdruck durch die Vorlauf-Innenkammeröffnung 38 in die Vorlaufinnenkammer 22 gedrückt und gelangt von dort zwangsgeführt über den horizontalen Schlitz 31 und die vertikale Strömungsverengung 32 in die Vorlaufaußenkammer 12, s. punktierte Pfeile in Figur 2a. Das Wasser wird somit um 270° bis 360° umgelenkt, bis es in die Vorlaufaußenkammer 12 gelangt. Diese Warmwasserströmung entlang der erfindungsgemäßen Konstruktion sorgt beim Beladen des Speichers für eine wesentliche Beruhigung des Wassers, so dass dieses sich nahezu verwirbelungsfrei in der Vorlaufaußenkammer 12 entsprechend seiner Temperatur schichten kann und durch entsprechende Öffnungen 19a, 19b die Vorlaufaußenkammer 12 in das Speichervolumen des Tanks 70 verlassen kann.

Wenn bei Bedarf im Speicher befindliches Warmwasser durch das Vorlaufrohr 35 zu den Verbrauchern geführt werden soll, wird dieses durch die Vorlauf-Innenkammeröffnung 38 abgezogen, wobei Wasser hierbei im wesentlichen durch die untersten Öffnungen 19a, 19b aus dem Tankvolumen angesaugt und durch die Vorlauf-Zwischenkammeröffnung 30 zur Vorlaufinnenkammer 22 gelangt.

Die Rücklaufkammer 40 ist gemäß dem vorliegenden Ausführungsbeispiel identisch zur Vorlaufkammer 10 ausgebildet. Die Rücklaufkammer 40 ist lediglich um 180° gedreht im Tank 70 angeordnet, wobei die Drehachse parallel zu Vorlaufrohr 35 und Rücklaufrohr 65 und mittig zwischen diesen verläuft.

Auch die Rücklaufkammer 40 ist quaderförmig mit Deckenwand 43, Bodenwand 44, äußerer Seitenwand 45 (in Figur 2 abgenommen), innerer Seitenwand 46, Vorderwand 47 (in Figur 2 abgenommen) und Rückwand 48 ausgebildet. Gleichfalls sind in der Vorderwand 47 vertikal beabstandete Öffnungen 49a und in der Rückenwand 48 - ebenfalls geringfügig höhenversetzt - vertikal beabstandete Öffnungen 49b vorgesehen.

Die Rücklaufkammer 50 ist in eine Rücklaufaußenkammer 42 und eine Rücklaufinnenkammer 52 zweigeteilt, wobei die Rücklaufinnenkammer 52 durch ein nach oben offenes, U-förmig gebogenes Blech gebildet ist, das mit einer Seitenwand 56 an der Innenseite der inneren Seitenwand 46 der Rücklaufaußenkammer 42 befestigt ist, s. Figur 2b. Nach unten hin schließt eine Bodenwand 54 die Rücklaufinnenkammer 52 zur Rücklaufaußenkammer 42 ab.

Die Vorlaufkammer 10 und die Rücklaufkammer 40, die beide strömungstechnisch nicht unmittelbar miteinander verbunden sind, sind auf Höhe der beiden Innenkammern 22, 52 an den beiden inneren Seitenwänden 16, 46 miteinander verbunden, vorteilhafterweise verschweißt und/oder verschraubt.

Durch die Rücklaufinnenkammer 52 ist ein Rücklaufrohr 65 geführt. Das Rücklaufrohr 65 ist einstückig aus den Abschnitten Rücklauf-Einlaufrohr 65a, nach unten offener rinnenförmiger Abschnitt 66 und Rücklauf-Ablaufrohr 65b gebildet. Die Rinne schafft eine zu den Seiten und noch unten offene Rücklauf-Innenkammeröffnung 68, s.a. Figur 3b.

Die dritte, vertikal verlaufende Wand 55 der Rücklaufinnenkammer 52 endet in definiertem Abstand unterhalb der Deckenwand 43 der Rücklaufaußenkammer 42 (die identisch mit der Deckenwand der Rücklaufkammer 40 ist). Auf diese Weise entsteht ein sich über die Breite (senkrecht zur Zeichenebene der Figur 2a) der Rücklaufkammer 40 erstreckender Schlitz 61, dessen Höhe vorliegend ca. 20 % der Höhe der Wand 55 beträgt. Der Schlitz 61 ist Teil einer Rücklauf-Zwischenkammeröffnung 60, welche die Rücklaufinnenkammer 52 mit der Rücklaufaußenkammer 42 verbindet, s. Figur 2b. An den Schlitz bzw. die Öffnung 61 schließt sich - in Strömungsrichtung gesehen - eine als vertikaler Kanal ausgebildete Strömungsverengung 62 an, welche ebenfalls Teil der Rücklauf-Zwischenkammeröffnung 60 ist und deren konstanter Querschnitt (in der Zeichenebene der Figur 2b) hier gleich der Höhe des Schlitzes 61 ist. Die Breite der Strömungsverengung 62 (senkrecht zur Zeichenebene der Figur 2b) entspricht der Breite der Rücklaufkammer 40. Die Strömungsverengung 62 und somit auch die Rücklauf-Zwischenkammeröffnung 60 enden mit der Unterkante der Bodenwand 54 der Rücklaufinnenkammer 52.

Durch das Rücklaufrohr 65 herantransportiertes Wasser (s. Pfeile links und rechts vom Rohr 65) wird entsprechend dem in dem Rohr herrschenden Wasserdruck durch die Rücklauf-Innenkammeröffnung 68 in die Rücklaufinnenkammer 52 gedrückt und gelangt von dort zwangsgeführt über den horizontalen Schlitz 61 und die vertikale Strömungsverengung 62 in die Rücklaufaußenkammer 42, s. punktierte Pfeile in Figur 2b. Das Wasser wird somit um 270° bis 360° umgelenkt, bis es in die Rücklaufaußenkammer 42 gelangt. Diese Warmwasserströmung entlang der erfindungsgemäßen Konstruktion sorgt für eine wesentliche Beruhigung des Wassers, so dass dieses sich nahezu verwirbelungsfrei in der Rücklaufaußenkammer 42 entsprechend seiner Temperatur schichten kann und durch entsprechende Öffnungen 49a, 49b die Rücklaufaußenkammer 42 in das Speichervolumen des Tanks 70 verlassen kann, s. Pfeil f in Figur 2.

Wenn hingegen im Speicher befindliches Wasser durch das Rücklaufrohr 65 zum Heizkessel geleitet werden soll, wird dieses durch die Rücklauf-Innenkammeröffnung 68 abgezogen, wobei Wasser hierbei im wesentlichen durch die obersten Öffnungen 49a, 49b aus dem Tankvolumen angesaugt und durch die Rücklauf-Zwischenkammeröffnung 60 zur RücklaufInnenkammer 62 gelangt.

Einem ruhigen Wasserfluss kommt es weiterhin zu gute, wenn das Verhältnis des Öffnungsquerschnitts der Vorlauf-Zwischenkammeröffnung 30 zum Öffnungsquerschnitt der Vorlauf-Innenkammeröffnung 38 vorzugsweise zwischen 1 und 4, und bevorzugt ungefähr 1,5 beträgt. Aus dem gleichen Grund beträgt das Verhältnis des Öffnungsquerschnitts der Rücklauf-Zwischenkammeröffnung 60 zum Öffnungsquerschnitt der Rücklauf-Innenkammeröffnung 68 vorzugsweise zwischen 1 und 4, und bevorzugt ungefähr 1,5.

Bei einer nicht dargestellten Alternative verlaufen die Wände 25 bzw. 26 der Vorlaufinnenkammer 22 in im wesentlichen gleichen Abstand und parallel zu der Seitenwand 15 bzw. 16 der Vorlaufkammer 10. Entsprechendes kann für die Wände 55 bzw. 56 der Rücklaufinnenkammer 52 gelten, welche in diesem Fall in im wesentlichen gleichen Abstand und parallel zur Wand 45 bzw. 46 der Rücklaufkammer 40 verlaufen. Die Summe der Abstände der jeweiligen beiden Wandpaare entspricht hierbei dem Abstand der in den Figuren 2a und 2b dargestellten Abständen zwischen den Wänden 15 und 25 (Figur 2a) bzw. zwischen den Wänden 45 und 55 (Figur 2b).

Insgesamt resultiert beim Beladen des Speichers 1 eine Strömungsberuhigung schon in den beiden Außenkammern 12, 42, in denen sich das Wasser schon entsprechend seiner Temperatur schichten kann. Zudem wird durch die erfindungsgemäße Ausgestaltung des Einsatzes 5 eine die Wasserschichtung kaum beeinflussende Entladung des Speichers realisiert.

Die Erfindung wurde anhand eines Ausführungsbeispiels näher erläutert. Abwandlungen der Erfindung sind im Rahmen der Patentansprüche ohne weiteres möglich. So können beispielsweise anstelle der in den Figuren jeweils einzeln vorhandenen Einström- und Ausströmöffnungen 38, 30, 68, 60 eine oder mehrere dieser Öffnungen aus jeweils einer Mehrzahl von Öffnungen bestehen. Auch können die Schlitze 31, 61 in mehrere Öffnungen unterteilt sein. Auch ist es selbstverständlich möglich, dass in dem Schichtspeicher zusätzlich ein Trinkwasser-Durchlaufrohr verläuft. Gleichfalls kann eine Heizwendel vorgesehen sein, die mit einer Solaranlage verbunden ist.

## Patentansprüche

1. Warmwasser-Schichtspeicher mit einem Tank (70) sowie einer im Tank (70) vertikal angeordneten Vorlaufkammer (10) und einer vertikal im Tank (70) angeordneten Rücklaufkammer (40), wobei die Vorlaufkammer (10) eine Vorlaufinnenkammer (22) und eine Vorlaufaußenkammer (12) aufweist, und die Rücklaufkammer (40) eine Rücklaufinnenkammer (52) und eine Rücklaufaußenkammer (42) aufweist, und wobei die Vorlauf- und die Rücklaufaußenkammer (12, 42) jeweils mit dem umgebenden Tankvolumen über vertikal beabstandete Öffnungen (19a, 19b, 49a, 49b) verbunden sind, sowie mit jeweils mindestens einem in die Vorlaufinnenkammer (22) mündenden Vorlauf-Einlaufrohr (35a) mit mindestens einer Vorlauf-Innenkammeröffnung (38) und einem Vorlauf-Ablaufrohr (35b), und mit jeweils mindestens einem in die Rücklaufinnenkammer (52) mündenden Rücklauf-Einlaufrohr (65a) mit mindestens einer Rücklauf-Innenkammeröffnung (68) und einem Rücklauf-Ablaufrohr (65b), und wobei die Vorlaufinnenkammer (22) mit der Vorlaufaußenkammer (12) über mindestens eine Vorlauf-Zwischenkammeröffnung (30) und die Rücklaufinnenkammer (52) mit der Rücklaufaußenkammer (42) über mindestens eine Rücklauf-Zwischenkammeröffnung (60) verbunden sind, **dadurch gekennzeichnet, dass** die mindestens eine Vorlauf-Zwischenkammeröffnung (30) derart ausgebildet ist, dass das beim Beladen des Speichers von der Vorlaufinnenkammer (22) zur Vorlaufaußenkammer (12) strömende Wasser zumindest abschnittsweise aufwärts zwangsgeführt wird, und/oder dass die mindestens eine Rücklauf-Zwischenkammeröffnung (60) derart ausgebildet ist, dass das beim Beladen des Speichers von der Rücklaufinnenkammer (52) zur Rücklaufaußenkammer (42) strömende Wasser zumindest abschnittsweise abwärts zwangsgeführt wird.

2. Speicher nach Anspruch 1, **dadurch gekennzeichnet, dass** die Vorlauf-Innenkammeröffnung (38) derart angeordnet ist, dass das Wasser abwärts geleitet wird, um zur Vorlauf-Zwischenkammeröffnung (30) zu gelangen, und/oder dass die Rücklauf-Innenkammeröffnung (68) derart angeordnet ist, dass das Wasser aufwärts geleitet wird, um zur Rücklauf-Zwischenkammeröffnung (60) zu gelangen.

3. Speicher nach einem der vorhergehenden Ansprüche, **dadurch gekennzeichnet, dass** die Vorlaufinnenkammer (22) im unteren Bereich der Vorlaufkammer (10) angeordnet ist.

4. Speicher nach einem der vorhergehenden Ansprüche, **dadurch gekennzeichnet, dass** die Rücklaufinnenkammer (52) im oberen Bereich der Rücklaufkammer (40) angeordnet ist.

5. Speicher nach einem der vorhergehenden Ansprüche, **dadurch gekennzeichnet, dass** die Vorlauf-Zwischenkammeröffnung (30) und/oder die Rücklauf-Zwischenkammeröffnung (60) vorzugsweise horizontal verlaufende Schlitze (31; 61) umfassen.

6. Speicher nach einem der vorhergehenden Ansprüche, **dadurch gekennzeichnet, dass** die Vorlaufaußenkammer (12) und/oder die Vorlaufinnenkammer (22) jeweils quaderförmig ausgestaltet sind.

7. Speicher nach einem der vorhergehenden Ansprüche, **dadurch gekennzeichnet, dass** die Vorlaufinnenkammer (22) zum einen Teil durch ein L- oder U-förmig abgekantetes Blech und zum anderen Teil von Wandabschnitten (14) der Vorlaufaußenkammer (12) gebildet ist.

8. Speicher nach einem der vorhergehenden Ansprüche, **dadurch gekennzeichnet, dass** die Rücklaufaußenkammer (42) und die Rücklaufinnenkammer (52) jeweils quaderförmig ausgestaltet sind.

9. Speicher nach einem der vorhergehenden Ansprüche, **dadurch gekennzeichnet, dass** die Rücklaufinnenkammer (52) zum einen Teil durch ein L- oder U-förmig abgekantetes Blech und zum anderen Teil von Wandabschnitten (43) der Rücklaufaußenkammer (42) gebildet ist.

10. Speicher nach einem der vorhergehenden Ansprüche, **dadurch gekennzeichnet, dass** die Vorlauf-Zwischenkammeröffnung (30) eine Strömungsverengung (32) umfasst.

11. Speicher nach dem vorhergehenden Anspruch, **dadurch gekennzeichnet, dass** die Strömungsverengung (32) durch bevorzugt vertikale Wandabschnitte (25, 15) der Vorlaufinnenkammer (22) und der Vorlaufaußenkammer (12) gebildet ist.

12. Speicher nach einem der vorhergehenden Ansprüche, **dadurch gekennzeichnet, dass** die Rücklauf-Zwischenkammeröffnung (60) eine Strömungsverengung (62) umfasst.

13. Speicher nach dem vorhergehenden Anspruch, **dadurch gekennzeichnet, dass** die Strömungsverengung (62) durch bevorzugt vertikale Wandabschnitte (55, 45) der Rücklaufinnenkammer (52) und der Rücklaufaußenkammer (42) gebildet ist.

14. Speicher nach einem der vorhergehenden Ansprüche, **dadurch gekennzeichnet, dass** das Vorlauf-Einlaufrohr (35a) und das Vorlauf-Ablaufrohr (35b) unter Bildung eines durchgehenden Vorlaufrohres (35) ineinander übergehen und vorzugsweise einstückig ausgebildet sind, und dass dieses Vorlaufrohr (35) mindestens eine Vorlauf-Innenkammeröffnung (38) aufweist.

15. Speicher nach einem der vorhergehenden Ansprüche, **dadurch gekennzeichnet, dass** das Verhältnis des Öffnungsquerschnitts der Vorlauf-Zwischenkammeröffnung (30) zum Öffnungsquerschnitt der Vorlauf-Innenkammeröffnung (38) zwischen 1 und 4 beträgt, vorzugsweise im Bereich von 1,5.

16. Speicher nach einem der vorhergehenden Ansprüche, **dadurch gekennzeichnet, dass** das Vorlaufrohr (35) rinnenförmig zur Bildung einer sich längserstreckenden Vorlauf-Innenkammeröffnung (38) ausgebildet ist.

17. Speicher nach einem der vorhergehenden Ansprüche, **dadurch gekennzeichnet, dass** die Vorlauf-Innenkammeröffnung (38) nach oben gerichtet ist und dass das austretende Wasser um mehr als 180° umgelenkt wird, um zur Vorlauf-Zwischenkammeröffnung (30) zu gelangen.

18. Speicher nach einem der vorhergehenden Ansprüche, **dadurch gekennzeichnet, dass** das Rücklauf-Einlaufrohr (65a) und das Rücklauf-Ablaufrohr (65b) unter Bildung eines durchgehenden Rücklaufrohres (65) ineinander übergehen und vorzugsweise einstückig ausgebildet sind, und dass dieses Rücklaufrohr (65) mindestens eine Rücklauf-Innenkammeröffnung (68) aufweist.

19. Speicher nach einem der vorhergehenden Ansprüche, **dadurch gekennzeichnet, dass** das Verhältnis des Öffnungsquerschnitts der Rücklauf-Zwischenkammeröffnung (60) zum Öffnungsquerschnitt der Rücklauf-Innenkammeröffnung (68) zwischen 1 und 4 beträgt, vorzugsweise im Bereich von 1,5.

20. Speicher nach einem der vorhergehenden Ansprüche, **dadurch gekennzeichnet, dass** das Rücklaufrohr (65) rinnenförmig zur Bildung einer sich längserstreckenden Rücklauf-Innenkammeröffnung (68) ausgebildet ist.

21. Speicher nach einem der vorhergehenden Ansprüche, **dadurch gekennzeichnet, dass** die Rücklauf-Innenkammeröffnung (68) nach unten gerichtet ist und dass das austretende Wasser um mehr als 180° umgelenkt wird, um zur Rücklauf-Zwischenkammeröffnung (60) zu gelangen.

22. Speicher nach einem der vorhergehenden Ansprüche, **dadurch gekennzeichnet, dass** Vorlauf- und Rücklaufrohr (35, 65) auf im wesentlichen gleicher Höhe verlaufen und/oder die Vorlaufinnenkammer (22) und die Rücklaufinnenkammer (52) auf im wesentlichen gleicher Höhe angeordnet sind.

23. Speicher nach einem der vorhergehenden Ansprüche, **dadurch gekennzeichnet, dass** die Vorlaufkammer (10) und Rücklaufkammer (40) horizontal gegeneinander versetzt und mit geringer vertikaler Überlappung angeordnet sind.

24. Speicher nach einem der vorhergehenden Ansprüche, **dadurch gekennzeichnet, dass** die Vorlaufkammer (10) und die Rücklaufkammer (40) mechanisch miteinander verbunden sind, z.B. verschweißt und/oder verschraubt sind.

25. Speicher nach einem der vorhergehenden Ansprüche, **dadurch gekennzeichnet, dass** die Vorlaufkammer (10) und die Rücklaufkammer (40) im wesentlichen identisch ausgebildet und um 180° zueinander gedreht im Tank (70) angeordnet sind.

## Claims

1. A stratified hot water storage tank having a tank (70) and a flow chamber (10) vertically disposed in the tank (70) and a return chamber (40) vertically disposed in the tank (70), the flow chamber (10) comprising an inner flow chamber (22) and an outer flow chamber (12), and the return chamber (40) comprises an inner return chamber (52) and an outer return chamber (42), and the outer flow and the outer return chamber (12, 42) each being connected to the surrounding tank volume by means of vertically spaced openings (19a, 19b, 49a, 49b), and each having at least one flow inlet pipe (35a) opening into the inner flow chamber (22) and comprising at least one inner flow chamber opening (38) and an flow outlet pipe (35b), and each having at least one return inlet pipe (65a) opening into inner return chamber (52) and having at least one inner return chamber opening (68) and a return outlet pipe (65b), and the inner flow chamber (22) is connected to the outer flow chamber (12) by means of at least one flow interchamber opening (30) and the inner return chamber (52) is connected to the outer return chamber (42) by means of at least one return interchamber opening (60), **characterized in that** the at least one flow interchamber opening (30) is implemented such that, when the storage tank is being charged, water flowing from the inner flow chamber (22) to the outer flow chamber (12) is forced upward at least in segments, and/or that the at least one return interchamber opening (60) is implemented such that, when the storage tank is being charged, water flowing from the inner return chamber (52) to the outer return chamber (42) is forced downward at least in segments.

2. The storage tank according to claim 1, **characterized in that** the inner flow chamber opening (38) is disposed such that the water is guided downward, in order to reach the flow interchamber opening (30), and/or that the inner return chamber opening (68) is disposed such that the water is guided upward, in order to reach the return interchamber opening (60).

3. The storage tank according to one of the preceding claims, **characterized in that** the inner flow chamber (22) is disposed in the lower region of the flow chamber (10).

4. The storage tank according to one of the preceding claims, **characterized in that** the inner return chamber (52) is disposed in the upper region of the return chamber (40).

5. The storage tank according to one of the preceding claims, **characterized in that** the flow interchamber opening (30) and/or the return interchamber opening (60) preferably comprise horizontally running slits (31;61).

6. The storage tank according to one of the preceding claims, **characterized in that** the outer flow chamber (12) and/or the inner flow chamber (22) are each designed as rectangular boxes.

7. The storage tank according to one of the preceding claims, **characterized in that** the inner flow chamber (22) is formed in one part by an L-shaped or U-shaped folded sheet metal, and in the other part by wall segments (14) of the outer flow chamber (12).

8. The storage tank according to one of the preceding claims, **characterized in that** the outer return chamber (42) and the inner return chamber (52) are each designed as rectangular boxes.

9. The storage tank according to one of the preceding claims, **characterized in that** the inner return chamber (52) is formed in one part by an L-shaped or U-shaped folded sheet metal, and in the other part by wall segments (43) of the outer return chamber (42).

10. The storage tank according to one of the preceding claims, **characterized in that** the flow interchamber opening (30) comprises a flow constriction (32).

11. The storage tank according to the preceding claim, **characterized in that** the flow constriction (32) is formed by preferably vertical wall segments (25, 15) of the inner flow chamber (22) and the outer flow chamber (12).

12. The storage tank according to one of the preceding claims, **characterized in that** the return interchamber opening (60) comprises a flow constriction (62).

13. The storage tank according to the preceding claim, **characterized in that** the flow constriction (62) is formed by preferably vertical wall segments (55, 45) of the inner return chamber (52) and the outer return chamber (42).

14. The storage tank according to one of the preceding claims, **characterized in that** the flow inlet pipe (35a) and the flow outlet pipe (35b) merge, forming a continuous flow pipe (35), and are preferably implemented as a single part, and that said flow pipe (35) comprises at least one inner flow chamber opening (38).

15. The storage tank according to one of the preceding claims, **characterized in that** the ratio of the cross section of the flow interchamber opening (30) to the cross section of the inner flow chamber opening (38) is between 1 and 4, preferably in the range of 1.5.

16. The storage tank according to one of the preceding claims, **characterized in that** the flow pipe (35) is implemented as a trough for forming a longitudinally extending inner flow chamber opening (38).

17. The storage tank according to one of the preceding claims, **characterized in that** the inner flow chamber opening (38) faces upward and that the exiting water is diverted by more than 180° in order to reach the flow interchamber opening (30).

18. The storage tank according to one of the preceding claims, **characterized in that** the inlet return pipe (65a) and the outlet return pipe (65b) merge, forming a continuous return pipe (65), and are preferably implemented as a single part, and that said return pipe (65) comprises at least one inner return chamber opening (68).

19. The storage tank according to one of the preceding claims, **characterized in that** the ratio of the cross section of the return interchamber opening (60) to the cross section of the inner return chamber opening (68) is between 1 and 4, preferably in the range of 1.5.

20. The storage tank according to one of the preceding claims, **characterized in that** the return pipe (65) is implemented as a trough for forming a longitudinally extending inner return chamber opening (68).

21. The storage tank according to one of the preceding claims, **characterized in that** the inner return chamber opening (68) faces downward and that the exiting water is diverted by more than 180° in order to reach the return interchamber opening (60).

22. The storage tank according to one of the preceding claims, **characterized in that** the flow and return pipes (35, 65) run at substantially the same height, and/or the inner flow chamber (22) and the inner return chamber (52) are disposed at substantially the same height.

23. The storage tank according to one of the preceding claims, **characterized in that** the flow chamber (10) and the return chamber (40) are offset horizontally relative to each other, and have little vertical overlap.

24. The storage tank according to one of the preceding claims, **characterized in that** the flow chamber (10) and the return chamber (40) are mechanically connected to each other, such as welded and/or bolted.

25. The storage tank according to one of the preceding claims, **characterized in that** the flow chamber (10) and the return chamber (40) are implemented substantially identically, and are disposed in the tank (70) rotated 180° relative to each other.

## Revendications

1. Réservoir d'eau chaude stratifié avec un réservoir (70) ainsi qu'une chambre aller (10) disposée verticalement dans le réservoir (70) et une chambre retour (40) disposée verticalement dans le réservoir (70), sachant que la chambre aller (10) comporte une chambre aller intérieure (22) et une chambre aller extérieure (12) et la chambre retour (40) présente une chambre retour intérieure (52) et une chambre retour extérieure (42), et sachant que les chambres aller et retour extérieures (12, 42) sont respectivement reliées avec le volume de réservoir environnant par des ouvertures (19a, 19b, 49a, 49b) distancées verticalement les unes des autres, ainsi qu'avec respectivement au moins un tube d'admission aller (35a) débouchant dans la chambre aller intérieure (22) avec au moins une ouverture de chambre aller intérieure (38) et un tube de décharge aller (35b), et avec respectivement au moins un tube d'admission retour (65a) débouchant dans la chambre retour intérieure (52) avec au moins une ouverture de chambre retour intérieure (68) et un tube de décharge retour (65b), et sachant que la chambre aller intérieure (22) est reliée avec la chambre aller extérieure (12) par au moins une ouverture de chambre intermédiaire aller (30) et la chambre retour intérieure (52) est reliée à la chambre retour extérieure (42) par au moins une ouverture de chambre intermédiaire retour (60), **caractérisé en ce que** l'au moins une ouverture de chambre intermédiaire aller (30) se présente sous une forme telle que l'eau s'écoulant de la chambre aller intérieure (22) vers la chambre aller extérieure (12) durant le remplissage du réservoir soit guidée vers le haut au moins en certaines sections et/ou que l'au moins une ouverture de chambre intermédiaire retour (60) se présente sous une forme telle que l'eau s'écoulant de la chambre retour intérieure (52) vers la chambre retour extérieure (42) durant le remplissage du réservoir soit guidée vers le bas au moins en certaines sections.

2. Réservoir selon la revendication 1, **caractérisé en ce que** l'ouverture de chambre aller intérieure (38) est disposée de telle manière que l'eau soit guidée vers le bas afin de parvenir à l'ouverture de chambre intermédiaire aller (30), et/ou que l'ouverture de chambre retour intérieure (68) est disposée de telle manière que l'eau soit guidée vers le haut afin de parvenir à l'ouverture de chambre intermédiaire retour (60).

3. Réservoir selon l'une quelconque des revendications précédentes, **caractérisé en ce que** la chambre aller intérieure (22) est disposée dans la partie inférieure de la chambre aller (10).

4. Réservoir selon l'une quelconque des revendications précédentes, **caractérisé en ce que** la chambre retour intérieure (52) est disposée dans la partie supérieure de la chambre retour (40).

5. Réservoir selon l'une quelconque des revendications précédentes, **caractérisé en ce que** l'ouverture de chambre intermédiaire aller (30) et/ou l'ouverture de chambre intermédiaire retour (60) comprennent des fentes (31 ; 61) s'étendant de préférence horizontalement.

6. Réservoir selon l'une quelconque des revendications précédentes, **caractérisé en ce que** la chambre aller extérieure (12) et/ou la chambre aller intérieure (22) se présente(nt) respectivement sous une forme parallélépipédique.

7. Réservoir selon l'une quelconque des revendications précédentes, **caractérisé en ce que** la chambre aller intérieure (22) est formée en partie par une tôle repliée en forme de L ou de U et en partie par des segments de parois (14) de la chambre aller extérieure (12).

8. Réservoir selon l'une quelconque des revendications précédentes, **caractérisé en ce que** la chambre retour extérieure (42) et la chambre retour intérieure (52) se présentent respectivement sous une forme parallélépipédique.

9. Réservoir selon l'une quelconque des revendications précédentes, **caractérisé en ce que** la chambre retour intérieure (52) est formée en partie par une tôle repliée en forme de L ou de U et en partie par des segments de parois (43) de la chambre retour extérieure (42).

10. Réservoir selon l'une quelconque des revendications précédentes, **caractérisé en ce que** l'ouverture de chambre aller intermédiaire (30) présente un étranglement d'écoulement (32).

11. Réservoir selon la revendication précédente, **caractérisé en ce que** l'étranglement d'écoulement (32) est formée des segments de parois (25, 15) de préférence verticaux de la chambre aller intérieure (22) et de la chambre aller extérieure (12).

12. Réservoir selon l'une quelconque des revendications précédentes, **caractérisé en ce que** l'ouverture de chambre retour intermédiaire (60) présente un étranglement d'écoulement (62).

13. Réservoir selon la revendication précédente, **caractérisé en ce que** l'étranglement d'écoulement (62) est formée des segments de parois (55, 45) de préférence verticaux de la chambre retour intérieure (52) et de la chambre retour extérieure (42).

14. Réservoir selon l'une quelconque des revendications précédentes, **caractérisé en ce que** le tube d'admission aller (35a) et le tube de décharge aller (35b) se confondent l'un avec l'autre en formant un tube aller continu (35) et se présentent de préférence sous une forme à une pièce, et que ce tube aller (35) présente au moins une ouverture de chambre aller intérieure (38).

15. Réservoir selon l'une quelconque des revendications précédentes, **caractérisé en ce que** le rapport de la section d'ouverture de l'ouverture de chambre intermédiaire aller (30) à la section d'ouverture de l'ouverture de chambre intérieure aller (38) se situe entre 1 et 4, de préférence autour de 1,5.

16. Réservoir selon l'une quelconque des revendications précédentes, **caractérisé en ce que** le tube aller (35) se présente sous forme de goulotte pour former une ouverture de chambre intérieure aller (38) s'étendant longitudinalement.

17. Réservoir selon l'une quelconque des revendications précédentes, **caractérisé en ce que** l'ouverture de chambre intérieure aller (38) est dirigée vers le haut et que l'eau sortante est déviée de plus de 180° afin de parvenir à l'ouverture de chambre intermédiaire aller (30).

18. Réservoir selon l'une quelconque des revendications précédentes, **caractérisé en ce que** le tube d'admission retour (65a) et le tube de décharge retour (65b) se confondent l'un avec l'autre en formant un tube retour continu (65) et se présentent de préférence sous une forme à une pièce, et que ce tube retour (65) présente au moins une ouverture de chambre retour intérieure (68).

19. Réservoir selon l'une quelconque des revendications précédentes, **caractérisé en ce que** le rapport de la section d'ouverture de l'ouverture de chambre intermédiaire retour (60) à la section d'ouverture de l'ouverture de chambre intérieure retour (68) se situe entre 1 et 4, de préférence autour de 1,5.

20. Réservoir selon l'une quelconque des revendications précédentes, **caractérisé en ce que** le tube retour (65) se présente sous forme de goulotte pour former une ouverture de chambre intérieure retour (68) s'étendant longitudinalement.

21. Réservoir selon l'une quelconque des revendications précédentes, **caractérisé en ce que** l'ouverture de chambre intérieure retour (68) est dirigée vers le bas et que l'eau sortante est déviée de plus de 180° afin de parvenir à l'ouverture de chambre intermédiaire retour (60).

22. Réservoir selon l'une quelconque des revendications précédentes, **caractérisé en ce que** les tubes aller et retour (35, 65) s'étendent à des hauteurs essentiellement égales et/ou la chambre intérieure aller (22) et la chambre intérieure retour (52) sont disposées à des hauteurs essentiellement égales.

23. Réservoir selon l'une quelconque des revendications précédentes, **caractérisé en ce que** la chambre aller (10) et la chambre retour (40) sont décalées horizontalement l'une par rapport à l'autre et disposées avec un léger chevauchement vertical.

24. Réservoir selon l'une quelconque des revendications précédentes, **caractérisé en ce que** la chambre aller (10) et la chambre retour (40) sont reliées mécaniquement l'une avec l'autre, par exemple soudées et/ou boulonnées.

25. Réservoir selon l'une quelconque des revendications précédentes, **caractérisé en ce que** la chambre aller (10) et la chambre retour (40) se présentent sous des formes essentiellement identiques et sont disposées dans le réservoir (70) tournées de 180° l'une vers l'autre.
